# EUROPÄISCHE PATENTSCHRIFT

(11) **EP 1 938 163 B1**
(45) Veröffentlichungstag und Bekanntmachung des Hinweises auf die Patenterteilung: **21.07.2010**
(21) Anmeldenummer: 06753917.1
(22) Anmeldetag: 26.05.2006
(51) Int. Cl.: G05B 19/402

(54) **VORRICHTUNG ZUR ÜBERWACHUNG DER RELATIVPOSITION MEHRERER EINRICHTUNGEN**
DEVICE FOR MONITORING THE RELATIVE POSITION OF A PLURALITY OF INSTALLATIONS
DISPOSITIF SERVANT A SURVEILLER LA POSITION RELATIVE DE PLUSIEURS INSTALLATIONS

(30) Priorität: 21.10.2005 DE 202005016654 U
(43) Veröffentlichungstag der Anmeldung: 02.07.2008
(73) Patentinhaber: Integrated Dynamics Engineering GmbH, 65479 Raunheim (DE)
(72) Erfinder: MAAS, Hans-Jürgen, 55286 Wörrstadt (DE); HEILAND, Peter, 65479 Raunheim (DE)
(74) Vertreter: Kampfenkel, Klaus
(86) Internationale Anmeldenummer: PCT/EP2006/005061
(87) Internationale Veröffentlichungsnummer: WO 2007/045286

(56) Entgegenhaltungen:
- EP-A- 0 557 100
- US-A- 4 627 010
- "Keeping the appropriate Headway Distance Sensor Controled" WORKSHOP 6 ACC_E.DOC, [Online] September 2001 (2001-09), XP002396671 Frankfurt Gefunden im Internet: URL:http://www.contitevesna.com/word/Press Kits/Frankfurt/> [gefunden am 2006-08-29]

## Beschreibung

Die Erfindung betrifft eine Maßnahme zur Überwachung der Relativposition schwingungsisolierter Einrichtungen und insbesondere eine Vorrichtung sowie ein Verfahren zur Überwachung der Relativposition mehrerer Einrichtungen.

Es sind Anlagen, nachfolgend auch Systeme oder Vorrichtungen genannt, bekannt, die eine erste, schwingungsisolierte Einrichtung, nachfolgend auch erstes Subsystem genannt, und ein zweites Subsystem aufweisen, welches ebenfalls schwingungsisoliert aufgestellt sein kann. Das erste Subsystem kann eine Lithographieeinrichtung enthalten, wohingegen das zweite Subsystem beispielsweise einen Roboter zur Bestückung der Lithografieeinrichtung mit Wafern aufweist.

Eine Vorrichtung zur Abstandsmessung im Verkehrsbereich wird im Konferenz-Abstract "Keeping the appropriate Distance Sensor controled" (URL: http://www.contitevesna.com/word/press/Kits/Frankfurt/> beschrieben. Diese Druckschrift betrifft Systeme zur Abstandsmessung von Automobilen (Adaptive Cruise Control =ACC). Bei den beschriebenen Systemen wird der Abstand zwischen zwei Automobilen mittels Radar oder Infrarot gemessen. Stellt das System fest, dass der Abstand zum voraus fahrenden Fahrzeug einen gewissen Mindestabstand unterschreitet, so wird die Geschwindigkeit des eigenen Fahrzeugs automatisch gedrosselt, bis ein in gewissen Grenzen einstellbarer Mindestabstand wieder erreicht ist. Ist die Straße wieder frei, so wird automatisch bis zum Erreichen der gewünschten Geschwindigkeit beschleunigt.

Im Gegensatz zur Erfindung stellen Automobile keinen Teil einer Gerätschaft dar.

Eine Lithographieeinrichtung mit einer schrittweisen arbeitenden Belichtungsvorrichtung wird mittels Roboter bestückt (US 4,627,010). Zur Herabsetzung der Ruhezeit wird die Relativposition von Maske und Wafer gemessen, ein Abstandswert berechnet, der eine Änderung der Entfernungsmessungen darstellt, und der berechnete Wert mit einem kritischen Wert verglichen. Letzterer bezieht sich auf die Abschwächung der Schwingungen, die durch die schrittweisen Bewegungen der Belichtungsapparatur hervorgerufen werden.

Die Subsysteme sind im allgemeinen mechanisch nicht direkt miteinander verbunden, sondern stehen in einem wechselseitigen Austausch. Dieser Austausch kann beispielsweise ein Materialaustausch, ein Materialtransfer oder ebenso das Eintauchen eines Subsystems oder einer Komponente des Subsystems, beispielsweise eines Roboterarms, in das andere Subsystem hinein sein. Als Materialaustausch wird auch das Bestücken einer Lithografieeinrichtung mit Wafern gesehen. Wenigstens ein Subsystem ist dabei schwingungsisoliert aufgestellt. Beispielsweise ist das erste Subsystem über ein weiches Feder-Dämpfer-Glied mit einem Bezugssystem verbunden, um es gegen strukturgetragene Vibrationen zu isolieren. Das zweite Subsystem kann ebenfalls schwingungsisoliert, beispielsweise über ein Feder-Dämpfer-Glied mit erhöhter Steifigkeit an das selbe Bezugssystem angebunden sein. Auf die schwingungsisolierten Subsysteme wirkende interne, externe Kräfte und/oder Massenverschiebungen in einem Subsystem können zu einer merklichen relativen Positionsverschiebung führen.

Um einen fehlerfreien oder ordnungsgemäßen Betrieb der Anlage sicherstellen zu können, ist es notwendig, die relative Position beider Subsysteme zueinander mit einer hinreichenden Genauigkeit definiert aufrecht zu erhalten. Damit soll eine Gefährdung sowohl für die Subsysteme und deren Komponenten als auch für das ausgetauschte Material zum Beispiel bei dessen Bearbeitung durch die Lithografieeinrichtung verhindert werden.

Das Einhalten der erforderlichen Relativposition der Subsysteme, die einen fehlerfreien Betrieb ermöglicht, kann mit aktiven, d. h. geregelten schwingungsisolierten Subsystemen erzielt werden. Hierzu wird die Relativposition während des Betriebs überwacht und innerhalb eines vorgegebenen Toleranzbereichs gehalten. Diese Methode ist kostenaufwendig. Denn diese Maßnahme verlangt aufwendige und daher teure Regelmechanismen und Wartungsarbeiten.

Nach einer alternativen oder ergänzenden Methode wird die relative Position einmalig vor Inbetriebnahme der Anlage überprüft und auf einen vorbestimmten Sollwert eingestellt. Während des Betriebes erfolgt keine Überwachung und keine Positionsregelung der Subsysteme. Vielmehr wird darauf vertraut, dass sich die relative Position der passiv schwingungsisolierten Subsysteme nicht mehr wesentlich verändert. Passiv schwingungsisoliert ist ein Subsystem, wenn dessen Position nicht geregelt wird.

Bei solchen Anlagen können Relativbewegungen der schwingungsisolierten Subsysteme zum Beispiel mechanisch durch Endanschläge, die den absoluten Bewegungsspielraum vorgeben, oder durch zeitlich begrenzte Ankopplungs- und/oder Fixiermechanismen eingegrenzt werden.

Die Bewegungseingrenzung kann sich in ihrer Wirkungsweise auf die Subsysteme jedoch konträr zur Schwingungsisolierung auswirken und führt nicht zwangsläufig zu einem ordnungsgemäßen Betrieb der Anlage.

Bei diesen Anlagen gibt es somit keine Kontrolle der Relativpositionen der Subsysteme während des Betriebs bei gleichzeitig optimierter Schwingungsisolation. Das heißt, es kann nicht festgestellt werden, ob die gewünschte Position der beiden Subsysteme zueinander eingehalten wird und somit ein fehlerfreier oder nahezu fehlerfreier Betrieb stattfindet. Fehlfunktionen vor und während des Betriebs, wie zum Beispiel der Transport eines Wafers von einem Subsytem zum anderen und die Bearbeitung des Wafers mittels der Lithografieeinrichtung können nicht ausgeschlossen oder verhindert werden.

Der vorliegenden Erfindung liegt somit die Aufgabe zugrunde, die Nachteile der bekannten Systeme zu vermeiden. Insbesondere wird eine Vorrichtung und ein Verfahren zur Überwachung der Relativposition mehrerer Einrichtungen bereitgestellt, welche mit einfachen und kostengünstigen Komponenten einen Fehlbetrieb verhindern kann.

Ein Kerngedanke ist darin zu sehen, eine Vorrichtung oder ein Gerät zur Überwachung der Relativposition und/oder zur Vermessung und Auswertung von Relativpositionen bei einem System, das mindestens zwei Subsystemen enthält, bereitzustellen, welches nachfolgend auch als Referenzverschiebungssteuerung, engl. Reference Displacement Control (RDC), bezeichnet wird. Die RDC nutzt ein geeignetes Messprinzip, um die relative Position von wenigstens zwei Einrichtungen oder Subsystemen vorzugsweise fortlaufend zu bestimmen, auszuwerten und die ausgewerteten Informationen über verschiedene Schnittstellen weiterzuleiten.

Die Subsysteme können beispielsweise über Schwingungsisolationseinrichtungen mit unterschiedlicher Steifigkeit an einem gemeinsamen Bezugssystem montiert sein. Durch inertiale Kräfte, die innerhalb und von außen auf diese Subsysteme wirken, können die Subsysteme derart ausgelenkt werden, dass die geforderte Relativposition der Subsysteme zueinander gestört wird oder gestört werden kann.

Positionssensoren werden eingesetzt, deren Signale über eine analoge oder digitale Mess- und/oder Auswerteeinheit verarbeitet werden. Das Messergebnis einzelner Sensoren ebenso wie die Kombination der Signale von allen Positionssensoren werden ermittelt und die Information daraus abgeleitet, ob sich die Werte einzelner oder aller Sensoren in einem parametrierbaren Fenster, z. B. vertikalen und horizontalen Toleranzbereich, befinden. Diese Information bietet der RDC über eine digitale I/O Schnittstelle ebenso wie über eine visuelle Anzeige an.

Die Sensoren werden derart angebracht, dass die Positionsveränderung des oder der Subsysteme in dem durch den Einbau sich ableitenden Freiheitsgrad gemessen werden kann.

Eine weitere Schnittstelle überträgt alle Information, die sowohl gemessene als auch bewertete Zustände enthalten kann. Die bewerteten Zustände entsprechen der Information, welche nach der Prüfung durch die Auswerteeinrichtung bereitgestellt wird. Der RDC kann über diese Schnittstelle mit Hilfe eines einfachen Terminals und/oder einer Software ausgelesen und gesteuert werden.

Das System wird somit darüber informiert, ob die relative Position oder Relativposition beider Einrichtungen, auch Subsysteme genannt, zueinander in einem Fenster oder in einem Toleranzintervall liegt, in dem ein Austausch von Material oder ein Eintauchen einer Komponente in die andere stattfinden darf, ohne Material oder Komponente(n) zu gefährden.

Die Situation, dass die Überwachung des Systems nicht mehr gewährleistet ist, da zum Beispiel der RDC selbst eine Fehlfunktion hat, wird durch eine Heartbeat-Funktion verhindert. Diese Funktion zeigt den permanenten Datenverkehr zwischen Sensoren und Auswerteeinheit an und ist ebenfalls über Schnittstellen und/oder die visuelle Anzeige nutzbar. Sowohl die Heartbeat-Funktion als auch Auswertesignale können als Triggersignal für geeignete Gegenmaßnahmen, beispielsweise ein Ausschalten des Systems und/oder Nachjustieren, d. h. Neupositionierung der Subsysteme, dienen.

Unter Verwendung des RDCs kann die Position einzelner stationärer oder beweglicher Einrichtungen oder die Relativposition der Einrichtungen ermittelt werden. Dadurch wird insbesondere die Überwachung der Positionsstabilität von

Isolationssystemen oder Schwingungsisolationseinrichtungen ermöglicht.

Der Aufbau von unabhängigen Komponenten wie Positionssensoren auf der Messseite und einer Firmware auf der Auswerteseite, die weitestgehend freiprogrammierbar ist, macht den RDC für andere Anwendungen im Bereich der Positionsbestimmung und Positionsüberwachung vielseitig adaptierbar und einsetzbar.

Die oben genannte Aufgabe wird zum einen durch eine Vorrichtung zur Überwachung der Relativposition mehrerer Einrichtungen gelöst. Die Vorrichtung weist mehreren Einrichtungen, auch Subsysteme genannt auf, von denen wenigstens eine Einrichtung eine passive Schwingungsisolationseinrichtung aufweist. Passiv bedeutet hierbei, dass die Schwingsisolationeinrichtung nicht geregelt wird. Die Vorrichtung umfasst ferner zumindest eine Einrichtung zum Bestimmen der Relativposition der Einrichtungen und eine Auswerteeinrichtung zum Prüfen, ob die gemessene Relativposition der Einrichtungen innerhalb eines Toleranzintervalls liegt.

Die Einrichtungen, deren Relativposition überwacht wird, werden nachfolgend auch als Subsysteme bezeichnet.

Weisen mehrere Einrichtungen eine Schwingungsisolationseinrichtung auf, so können diese unterschiedliche Steifigkeiten aufweisen. Die Einrichtungen können somit ein unterschiedliches Schwingungsverhalten zeitigen. Dies ist eine mögliche Ursache dafür, dass die Relativposition der Einrichtungen aus dem Toleranzintervall fallen kann. Die Vorrichtung soll insbesondere diesen Zustand erkennen.

Die Relativposition der Einrichtungen beschreibt die Position der einzelnen Einrichtungen zueinander. Es ist dabei nicht zwingend notwendig, dass die Positionsbestimmungseinrichtung zum Bestimmen der Relativposition direkt die Relativposition der Einrichtungen bestimmt oder misst. Vielmehr ist es auch möglich, dass die einzelnen Positionen der Einrichtungen relativ zu einem Bezugspunkt bestimmt oder gemessen werden und erst in einem nachfolgenden Verarbeitungsschritt die Relativposition der Einrichtungen bestimmt wird.

Der nachfolgende Verarbeitungsschritt kann beispielsweise durch ein Auswerteeinrichtung durchgeführt werden. Der Bezugspunkt kann eine Bodenplatte, auf der die Einrichtungen positioniert sind, sein.

Insbesondere wird die vertikale und/oder die horizontale Relativposition der Einrichtungen bestimmt.

Die Einrichtung zum Bestimmen der Relativposition kann beispielsweise wenigstens einen Sensor zum Bestimmen der Position aufweisen. Dieser Sensor, nachfolgend auch Positionssensor genannt, kann je nach Anforderungen beispielsweise ein mechanischer, optischer, induktiver, kapazitiver und/oder piezoelektrischer Sensor sein. In Abhängigkeit der Leistungsmerkmale einzelner Positionssensoren kann durch einen Positionssensor oder durch mehrere Positionssensoren und/oder durch deren Ort der Positionierung an den Einrichtungen die Gesamtheit aller sechs Freiheitsgrade oder deren Veränderung erfasst werden.

Das Toleranzintervall oder der Toleranzbereich wird zweckmäßigerweise durch einen oberen und einen unteren Grenzwert, innerhalb derer der Wert der Relativposition variieren dürfen, festgelegt.

Liegt der Wert der überwachten Relativposition außerhalb des Toleranzintervalls, so kann dies zu einer Beschädigung der Einrichtungen und zu einem Fehlbetrieb führen. Um dies zu verhindern, darf die Relativposition nur Werte aufweisen, die innerhalb dieses Toleranzintervalls liegen.

Die Auswerteeinrichtung umfaßt entsprechende Hardware- und/oder Softwarekomponenten, die unter Ansprechen auf Signale, welche durch die Positionsbestimmungseinrichtung bereitgestellt wird, prüfen, ob die Relativposition der Einrichtungen innerhalb des Toleranzintervalls liegt.

Die passive Schwingungsisolationseinrichtung kann an sich bekannte Feder- und/oder Dämpfungsglieder und zusätzlich eine schwere Masse enthalten, die der Isolation von Schwingungen oder Vibrationen dienen. Die Parameter, wie zum Beispiel die Steifigkeit der Schwingungsisolationseinrichtung werden vor Inbetriebnahme eingestellt. Die Parameter der passiven Schwingungsisolationseinrichtung können manuell oder elektronisch eingestellt oder bei veränderten Umgebungsbedingungen entsprechend nachjustiert werden.

Die Einrichtungen können eine Arbeitsstationen aufweisen, welche wiederum Roboter oder Lithographieeinrichtungen zum Bearbeiten von Wafern enthalten können.

Bei einer bevorzugten beispielhafte Ausführungsformen ist wenigstens eine der Einrichtungen als Arbeitsstation ausgebildet, wobei eine Steuerungseinrichtung vorgesehen ist, welche unter Ansprechen auf das Ergebnis der Auswerteeinrichtung den Betriebszustand der Arbeitsstation bestimmt.

Die Arbeitsstation führt eine Arbeit aus, die in Wechselwirkung mit der oder den anderen Einrichtungen steht. Beispielsweise kann es sich bei der Arbeitsstation um einen Roboter handeln, der einen Wafer auf einer anderen Einrichtung, welche einen Probentisch und die Lithographieeinrichtung aufweisen kann, plaziert oder von einer anderen Einrichtung aufnimmt.

Die Auswerteeinrichtung prüft die Relativposition der Einrichtungen. Liegen die Relativpositionen innerhalb des Toleranzintervalls, so kann der Roboter den Wafer auf der anderen Einrichtung plazieren. Hat sich dagegen die Relativposition der Einrichtung durch entsprechende Störungen, insbesondere Stöße oder Vibrationen, derart verändert, daß sie außerhalb des Toleranzintervalls liegt, so kann der Wafer durch ein Greifen des Roboter an einer falschen Stelle zerkratzt oder zerstört werden.

Die Steuerungseinrichtung umfaßt Hardware- und/oder Softwarekomponenten, die unter Ansprechen auf Informationen, zum Beispiel ein Notaussignal, welche die Auswerteeinrichtung liefert, den Betriebszustand der Arbeitsstation bestimmen. Bei dem Betriebszustand kann es sich um das Ausschalten und Anfahren der Einrichtung handeln. Insbesondere kann die Steuerungseinrichtung die Arbeitsstation in einen sicheren Betriebszustand - ausgeschalteter Zustand - fahren oder halten.

Nachdem sich die Einrichtung oder Einrichtungen in einem sicheren Betriebszustand befindet, können die Parameter der Schwingungsisolationseinrichtungen und/oder die Positionen der Einrichtungen zueinander neu eingestellt werden. Danach kann der Betrieb gestartet oder wieder aufgenommen werden.

Hierzu kann die Steuereinrichtung unter Ansprechen auf das Ergebnis der Auswerteeinrichtung die Neupositionierung der Einrichtungen steuern.

Weiterhin liegt im Rahmen der Erfindung auch ein Verfahren zur Überwachung der Relativposition mehrerer Einrichtungen, wobei zumindest eine Einrichtung eine passive. Schwingungsisolationseinrichtung aufweist. Das Verfahren umfasst die Schritte: Bestimmen der Relativposition der Einrichtungen, vorzugsweise durch zumindest eine Einrichtung zur Positionsbestimmung, und Prüfen, ob die gemessene Relativposition der Einrichtungen innerhalb eines Toleranzintervalls liegt.

Hierzu wird vorzugsweise wenigstens ein Toleranzbereich definiert.

Gemäß einer vorteilhaften Ausführungsform kann jedoch für jede Einrichtung, auch Subsystem genannt, ein eigener Toleranzbereich hinsichtlich deren Relativposition zu einem gemeinsamen Bezugssystem definiert werden. In diesem Fall kann die relative Position jeder Einrichtung zu dem gemeinsamen Bezugssystem bestimmt werden. Weiterhin wird dann hinsichtlich jeder bestimmten relativen Position geprüft, ob die jeweilige relative Position, d. h. die entsprechende Einrichtung, innerhalb des dazugehörenden Toleranzbereichs liegt.

Alternativ kann die relative Position der Einrichtungen zueinander bestimmt und anschließend geprüft werden, ob die bestimmte relative Position innerhalb des dazugehörenden Toleranzbereichs liegt.

Jeder definierte Toleranzbereich kann ein zweidimensionales Toleranzfenster darstellen, welches die zulässige horizontale und vertikale Position einer Einrichtung festlegt;

Um eine zuverlässige Positionsüberwachung ermöglichen zu können, wird die relative Position der Einrichtungen zu dem gemeinsamen Bezugssystem und/oder die relative Position der Einrichtungen zueinander regelmäßig oder fortlaufend bestimmt und ausgewertet.

Zweckmäßigerweise betrifft die Erfindung auch eine Verwendung der Vorrichtung und/oder des Verfahrens in einer Anlage oder Vorrichtung, welche entsprechende Schwingungsisolationseinrichtungen erfordert.
Die vorliegende Erfindung wird nachfolgend anhand eines Ausführungsbeispiels in Verbindung mit den Zeichnungen näher erläutert. Es zeigen:

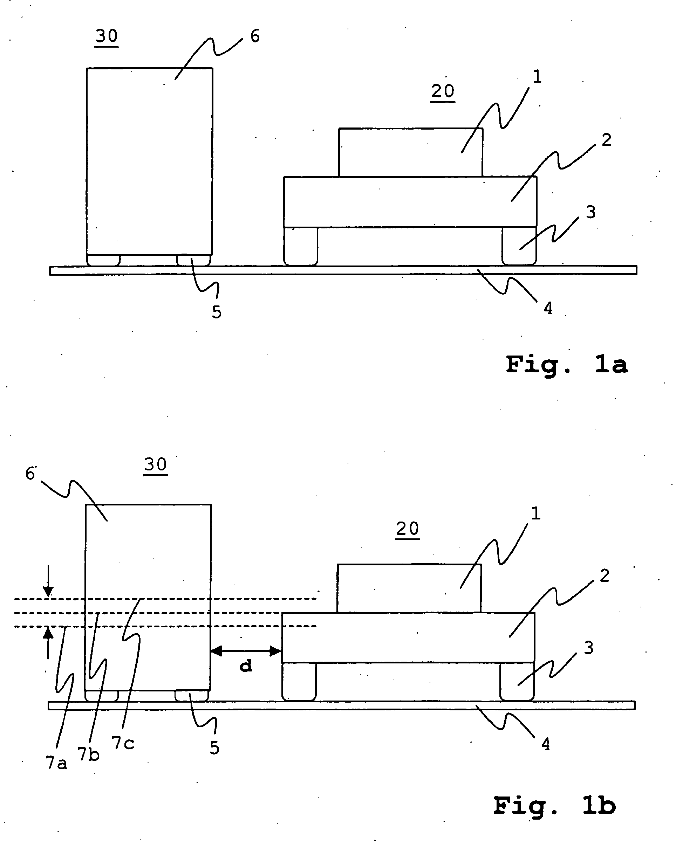

Fig. 1.a eine beispielhafte Ausführungsform zweier Einrichtungen, deren Relativposition überwacht werden,
Fig. 1.b die Ausführungsform nach Fig. 1.a, ergänzt mit einer horizontalen Sollposition, einer vertikalen Sollposition und einem vertikalen Toleranzbereich, welcher durch eine Maximal- und Minimalposition definiert ist,
Fig. 2.a das Blockschaltbild einer Auswerteeinrichtung und daran angeschalteter Positionssensoren zum Überwachen der Relativposition und

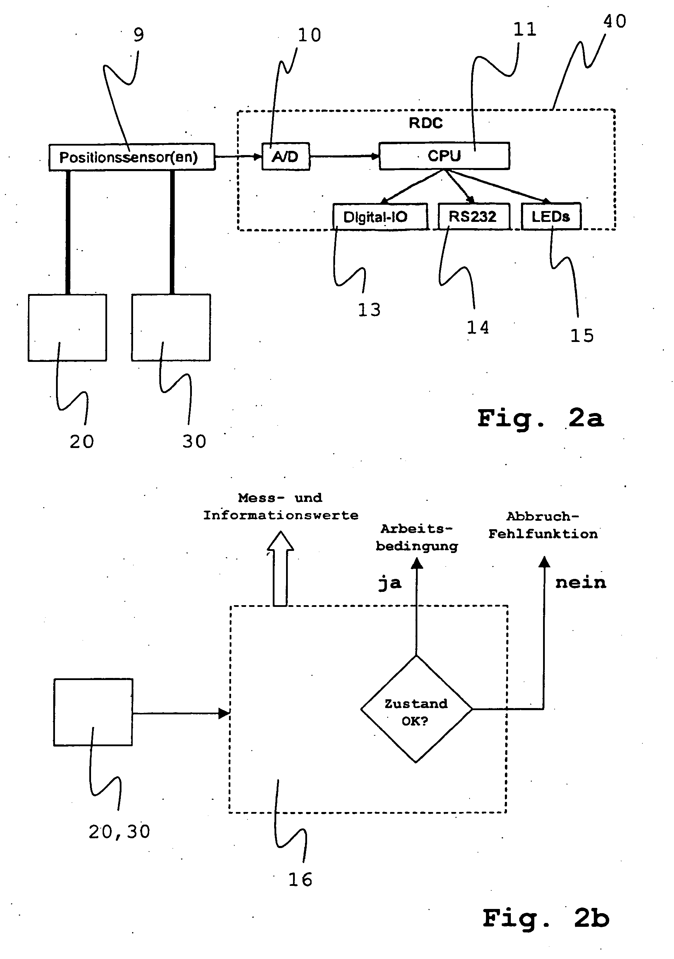

Fig. 2.b ein vereinfachtes Funktionsschaltbild der Auswerteeinrichtung.

Fig. 1.a zeigt eine beispielhafte Anlage, welche zwei Einrichtungen 20 und 30 aufweist, deren Relativposition zueinander mit einer in Fig. 2a detaillierter dargestellten Schaltungsanordnung überwacht wird. Die Einrichtungen 20 und 30 sind auf einer Bodenplatte 4 positioniert, die als Bezugssystem zur Bestimmung der Relativposition dient.

Die Einrichtung 20 umfasst zumindest eine Schwingungsisolationseinrichtung, welche beispielsweise vier Schwingungsisolatoren 3 und eine auf diesen gelagerte Masse 2 aufweist. Die Schwingungsisolatoren 3 können Feder-Dämpfungs-Elemente sein. Eine Einrichtung 1 ist auf der Masse 2 schwingungsisoliert angeordnet. Bei der schwingungsisolierten Einrichtung 1 kann es sich beispielsweise um einen Waferhalter und/oder eine Lithographievorrichtung handeln.

Die Einrichtung 30 ist eine Arbeitsstation, welche vorzugsweise eine Funktionseinrichtung 6 aufweist und beispielhaft auf Schwingungsisolatoren 5 gelagert ist. Die Steifigkeit der Schwingungsisolatoren 3 der Einrichtung 20 kann niedriger als die Steifigkeit der Schwingungsisolatoren 5 der Einrichtung 30 sein.

Bei einer nicht gezeigten Ausführungsform kann die Arbeitsstation 30 oder die Funktionseinrichtung 6 unmittelbar, d. h. ohne Schwingungsisolatoren 5 auf der Bodenplatte 4 positioniert sein. Die Funktionseinrichtung 6 kann beispielsweise ein Roboter zum Transportieren eines Wafers sein, welcher den Wafer auf dem Probenhalter plazieren oder von ihm aufnehmen kann.

Fig. 1.b zeigt wiederum die Anlage nach Fig. 1.a. Die Fig. 1b zeigt ergänzend eine horizontale Sollposition d, eine vertikale Sollposition 7b und einen vertikalen Toleranzbereich der Relativposition der Einrichtungen 20, 30. Der vertikale Toleranzbereich ist durch eine vertikale maximale Position 7c und eine vertikale minimale Position 7a gemessen von der Bodenplatte 4 festgelegt. Zudem ist eine horizontale Sollposition d gezeigt. Diese kann um einen Wert ± Δd innerhalb einer nicht dargestellten horizontalen maximalen Position und horizontalen minimalen Position variieren. Wie nachfolgend noch näher ausgeführt wird, kann die Anlage ordnungsgemäß betrieben werden, solange die Relativposition der Einrichtungen 20 und 30, die vor Inbetriebnahme der Anlage festgelegt worden ist, innerhalb der horizontalen und vertikalen Toleranzbereiche liegt.

Fig. 2.a zeigt beispielhaft ein Blockschaltbild, welches eine Auswerteeinrichtung 40 und Positionssensoren 9, die der Auswerteeinrichtung 40 Messwerte zuführen, enthält. Als Positionssensoren 9 können vorzugsweise Proximitysensoren verwendet werden. die die Position der Einrichtungen 20, 30 messen. Die Positionssensoren 9 können an einer Einrichtung, an beiden Einrichtungen und/oder an der Bodenplatte 4 angeordnet sein.

Die Information der Positionssensoren 9, hier beispielhaft in der Form analoger Signale, wird der Auswerteeinrichtung 40 zugeführt. Die Auswerteeinrichtung 40 kann einen Analog-/Digital-Wandler 10, eine Steuereinrichtung 11, die beispielsweise als CPU ausgebildet ist, einen digitalen Eingang und/oder Ausgang 13, der vorzugsweise als Open Collector Schaltung realisiert ist, eine serielle Schnittstelle 14, wie zum Beispiel die RS232-Schnittstelle, und/oder eine visuelle LED-Anzeige 15 aufweisen. Die LED-Anzeige kann mehrere LED-Elemente aufweisen, die den Betriebszustand der Anlage anzeigen können. So kann ein LED-Element den ordnungsgemäßen Betrieb der Anlage anzeigen, während ein anderes LED-Element den ausgeschalteten oder fehlerhaften Zustand der Anlage signalisieren kann. Die Ansteuerung der LED-Anzeige 15 erfolgt über die CPU 11, die aus den von den Positionssensoren 9 gelieferten Messwerten ermittelt, ob die Relativposition der Einrichtungen innerhalb oder außerhalb der definierten Toleranzbereiche liegt. Die Steuereinrichtung 11 kann auch veranlassen, dass die Anlage, insbesondere der Roboter 6 der Einrichtung 30 automatisch ausgeschaltet wird, wenn die Relativposition der Einrichtungen 20 und 30 während des Betriebs aus den Toleranzbereichen fällt.

In der gezeigten Ausführungsform ist der Analog-/Digital-Wandler 10 der Auswerteeinrichtung 40 zugeordnet. In einer weiteren nicht gezeigten Ausführungsform ist der Analog-/Digital-Wandler 10 selbständig oder den Positionssensoren 9 zugeordnet. Die analogen Signale der Positionssensoren 9 werden vom AD-Wandler 10 digitalisiert und der Steuereinrichtung 11 zur Verfügung gestellt.

Das zugehörige Funktionsschaltbild der Auswerteeinrichtung 40 ist in Fig. 2.b dargestellt. Die Steuereinrichtung 11 prüft jedes Positionssignal, ob es sich bereits über eine parametrisierbare Zeit zwischen einer minimalen Position und einer maximalen Position befindet. Liegt mindestens einer der gemessenen Positionswerte außerhalb dieser Grenzen, d.h. ist er kleiner als der minimale Wert oder größer als der maximale Wert oder liegt er nicht mindestens während der definierten Zeitdauer innerhalb der Grenzen, liegt ein Fehlerfall vor. Dieser Fehlerfall kann der Außenwelt, zum Beispiel einer Bedienperson, als Status-Wert, welcher über die RS232-schnittstelle von der Auswerteeinrichtung 40 abgefragt werden kann, und/oder als visuelle Information auf der Anzeigeeinrichtung 15 zur Verfügung gestellt werden. Darüber hinaus können die Positionsinformationen kontinuierlich oder zu vorbestimmten Zeitpunkten ebenfalls über die RS232-Schnittstelle 14 abgefragt werden und erlauben so weitere Überwachungs- und/oder Diagnosemöglichkeiten.

Die Auswerteeinrichtung 40 oder der RDC kann über die RS232-Schnittstelle 14 unter Verwendung eines einfachen Terminalprogramms auch konfiguriert werden. In dem Terminalprögramm können beispielhaft folgende Merkmale konfiguriert werden: Definition der Fehlerbedingung, Linearsierung und Kalibrierung der Sensoren, Bedingungen zur Ausfallsicherheit, wie Kabelbruch oder Prozessorstillstand, Standardeinstellungen und Startbedingungen und/oder Messgenauigkeit und Messfrequenz.

Es ist dem Fachmann ersichtlich, dass die vorstehend beschriebenen Ausführungsformen beispielhaft zu verstehen sind. Die einzeln gezeigten Merkmale können zudem miteinander kombiniert werden.

### Bezugszeichen:

- 1: Schwingungsisolierte Einrichtung
- 2: Gelagerte Masse
- 3: Vibrations- oder Schwingungsisolator
- 4: Bodenplatte
- 5: Vibrations- oder Schwingungsisolator
- 6: Funktionseinrichtung
- 7a: Vertikale Minimalposition
- 7b: Vertikale Sollposition
- 7c: Vertikale Maximalposition
- 9: Einrichtung zum Bestimmen der Relativposition
- 10: Analog-/Digital-Wandler
- 11: CPU
- 12: Digitaler Eingang und/oder Ausgang
- 14: Schnittstelle für RS232-Leitung
- 15: Visuelle LED-Anzeige
- 20: Einrichtung
- 30: Arbeitsstation
- 40: Auswerteeinrichtung
- d: Horizontale Sollposition

## Patentansprüche

1. Vorrichtung zur Überwachung der Relativposition mehrerer **Lithographie** einrichtungen (20, 30), mit mehreren Einrichtungen (20, 30), von denen zumindest eine Einrichtung (20) eine **passive** Schwingungsisolationseinrichtung (2, 3) aufweist, zumindest einer Einrichtung (9) zum Bestimmen der Relativposition der Einrichtungen (20, 30) und einer Auswerteeinrichtung (40) zum Prüfen, ob die gemessene Relativposition der Einrichtungen (20, 30) innerhalb eines Toleranzintervalls liegt,
wobei die Einrichtungen (20, 30) an einem gemeinsamen Bezugssystem (4), insbesondere einer Bodenplatte, montiert sind.

2. Überwachungsvorrichtung nach Anspruch 1, **dadurch gekennzeichnet, dass**
die Bestimmungseinrichtung (9) zum Bestimmen der relativen Position der Einrichtungen (20, 30) zum Bezugssystem ausgebildet ist, und dass die Auswerteeinrichtung (40) zum Bestimmen der Relativposition der Einrichtungen (20, 30) zueinander ausgebildet ist.

3. Überwachungsvorrichtung nach einem der Ansprüche 1 oder 2, **dadurch gekennzeichnet, dass** wenigstens eine der Einrichtungen (20, 30) eine Arbeitsstation (30), insbesondere ein Roboter, ist, und dass
eine Steuerungseinrichtung (11) vorgesehen ist, welche unter Ansprechen auf das Ergebnis der Bestimmungseinrichtung (9) den Betriebszustand der Arbeitsstation (30) bestimmt.

4. Überwachungsvorrichtung nach Anspruch 3,
**dadurch gekennzeichnet, dass**
die Steuereinrichtung (11) unter Ansprechen auf das Ergebnis der Bestimmungseinrichtung (9) die Arbeitsstation (30) in einen sicheren Betriebszustand fahren kann und/oder die Neupositionierung der Einrichtungen (20, 30) steuert.

5. Überwachungsvorrichtung nach Anspruch 1,
**dadurch gekennzeichnet, dass**
die Einrichtungen (20, 30) Schwingungsisolationseinrichtungen mit unterschiedlicher Steifigkeit aufweisen.

6. Überwachungsvorrichtung nach Anspruch **5,**
**dadurch gekennzeichnet, dass**
jede Schwingungsisolationseinrichtung (2, 3) wenigstens ein Feder-Dämpfer-Element enthält.

7. Überwachungssystem nach einem der Ansprüche 1 bis **6,**
**dadurch gekennzeichnet, dass**
die Bestimmungseinrichtung (**9**) die Relativposition der Einrichtungen (20, 30) zueinander bestimmt.

8. Überwachungseinrichtung nach einem der Ansprüche 1 bis **7**, **dadurch gekennzeichnet, dass** die Einrichtung (9) zum Bestimmen der Relativposition wenigstens einen Positionssensor aufweist.

9. Überwachungsvorrichtung nach Anspruch **8,**
**dadurch gekennzeichnet, dass**
der Positionssensor ein mechanischer, optischer, induktiver, kapazitiver oder piezoelektrischer Sensor ist.

10. Verfahren zum Überwachen der Relativposition mehrerer **Lithographie** einrichtungen (20, 30), wobei zumindest eine Einrichtung (**20**) eine passive Schwingungsisolationseinrichtung aufweist, mit folgenden Schritten:
Bestimmen der relativen Position der Einrichtungen (20, 30);
Festlegen wenigstens eines Toleranzbereichs; und Prüfen, ob die relative Position der Einrichtungen (20, 30) innerhalb des wenigstens einen einstellbaren Toleranzbereichs liegt, wobei die relative Position der Einrichtungen (20, 30) zu einem gemeinsamen Bezugssystem bestimmt wird.

11. Verfahren nach Anspruch **10**, **dadurch gekennzeichnet, dass** das Bestimmen der relativen Position der Einrichtungen (20, 30) in regelmäßigen Abständen erfolgt.

12. Verfahren nach Anspruch **10**, **dadurch gekennzeichnet, dass** das Bestimmen der relativen Position der Einrichtungen (20, 30) fortlaufend erfolgt.

13. Verfahren nach Anspruch 11 oder **12**,
**dadurch gekennzeichnet, dass**
geprüft wird, ob die bestimmte relative Position innerhalb den dazugehörenden Toleranzbereichs liegt, wobei der Toleranzbereich ein zweidimensionales Toleranzfenster ist.

## Claims

1. Apparatus for monitoring the relative position of several lithography devices (20, 30), having
several devices (20, 30) of which at least one device (20) comprises a passive vibration isolation device (2, 3),
at least one device (9) for determining the relative position of the devices (20, 30), and
an evaluation device (40) for testing whether the measured relative position of the devices (20, 30) is within a tolerance interval,
wherein the devices (20, 30) are mounted on a common reference system (4), in particular a base plate.

2. Monitoring apparatus as claimed in Claim 1, **characterised in that** the determining device (9) is formed for determining the relative position of the devices (20, 30) with respect to the reference system, and **in that** the evaluation device (40) is formed for determining the relative position of the devices (20, 30) with respect to each other.

3. Monitoring apparatus as claimed in any one of Claims 1 or 2, **characterised in that** at least one of the devices (20, 30) is a workstation (30), in particular a robot, and **in that** a control device (11) is provided which determines the operating state of the workstation (30) in response to the result of the determining device (9).

4. Monitoring apparatus as claimed in Claim 3, **characterised in that** in response to the result of the determining device (9) the control device (11) can move the workstation (30) into a secure operating state and/or controls the repositioning of the devices (20, 30).

5. Monitoring apparatus as claimed in Claim 1, **characterised in that** the devices (20, 30) comprise vibration isolation devices having different degrees of rigidity.

6. Monitoring apparatus as claimed in Claim 5, **characterised in that** each vibration isolation device (2, 3) contains at least one spring damper element.

7. Monitoring system as claimed in any one of Claims 1 to 6, **characterised in that** the determining device (9) determines the relative position of the devices (20, 30) with respect to each other.

8. Monitoring device as claimed in any one of Claims 1 to 7, **characterised in that** the device (9) for determining the relative position comprises at least one position sensor.

9. Monitoring apparatus as claimed in Claim 8, **characterised in that** the position sensor is a mechanical, optical, inductive, capacitive or piezoelectric sensor.

10. Method for monitoring the relative position of several lithography devices (20, 30), wherein at least one device (20) comprises a passive vibration isolation device, having the following steps:
determining the relative position of the devices (20, 30);
establishing at least one tolerance range; and
testing whether the relative position of the devices (20, 30) is within the at least one adjustable tolerance range, wherein the relative position of the devices (20, 30) is determined with respect to a common reference system.

11. Method as claimed in Claim 10, **characterised in that** the relative position of the devices (20, 30) is determined at regular intervals.

12. Method as claimed in Claim 10, **characterised in that** the relative position of the devices (20, 30) is determined continuously.

13. Method as claimed in Claim 11 or 12, **characterised in that** a test is performed as to whether the determined relative position is within the associated tolerance range, wherein the tolerance range is a two-dimensional tolerance window.

## Revendications

1. Dispositif pour contrôler la position relative de plusieurs dispositifs de lithographie (20, 30), comprenant plusieurs dispositifs (20, 30), dont moins un dispositif (20) présente un dispositif passif d'isolation de vibrations (2, 3), au moins un dispositif (9) pour déterminer la position relative des dispositifs (20, 30) et un dispositif d'analyse (40) pour vérifier si la position relative mesurée des dispositifs (20, 30) se situe à l'intérieur d'un intervalle de tolérance, les dispositifs (20, 30) étant montés sur un système de référence (4) commun, en particulier une plaque de fond.

2. Dispositif de contrôle selon la revendication 1, **caractérisé en ce que** le dispositif de détermination (9) est conçu pour déterminer la position relative des dispositifs (20, 30) par rapport au système de référence, et **en ce que** le dispositif d'analyse (40) est conçu pour déterminer la position relative des dispositifs (20, 30) les uns par rapport aux autres.

3. Dispositif de contrôle selon l'une quelconque des revendications 1 ou 2, **caractérisé en ce qu'**au moins l'un des dispositifs (20, 30) est une station de travail (30), en particulier un robot, et **en ce qu'**il est prévu un dispositif de commande (11), qui détermine l'état de service de la station de travail (30) en réaction au résultat du dispositif de détermination (9).

4. Dispositif de contrôle selon la revendication 3, **caractérisé en ce que** le dispositif de commande (11) commande peut amener la station de travail (30) dans une position de service en réaction au résultat du dispositif de détermination (9) et/ou commande le nouveau positionnement des dispositifs (20, 30).

5. Dispositif de contrôle selon la revendication 1, **caractérisé en ce que** les dispositifs (20, 30) présentent des dispositifs d'isolation de vibrations avec une rigidité différente.

6. Dispositif de contrôle selon la revendication 5, **caractérisé en ce que** chaque dispositif d'isolation de vibrations (2, 3) contient au moins un élément amortisseur à ressort.

7. Dispositif de contrôle selon l'une quelconque des revendications 1 à 6, **caractérisé en ce que** le dispositif de détermination (9) détermine la position relative des dispositifs (20, 30) les uns par rapports aux autres.

8. Dispositif de contrôle selon l'une quelconque des revendications 1 à 7, **caractérisé en ce que** le dispositif (9) présente au moins un capteur de position pour la détermination de la position relative.

9. Dispositif de contrôle selon la revendication 8, **caractérisé en ce que** le capteur de position est un capteur mécanique, optique, inductif, capacitif ou piézoélectrique.

10. Procédé pour contrôler la position relative entre plusieurs dispositifs de lithographie (20, 30), au moins un dispositif (20) comprenant un dispositif passif d'isolation de vibrations, comprenant les étapes suivantes :
détermination de la position relative des dispositifs (20, 30) ;
fixation d'au moins une plage de tolérance ; et vérification pour savoir si la position relative des dispositifs (20, 30) se situe à l'intérieur de la au moins une plage de tolérance réglable, la position relative des dispositifs (20, 30) étant déterminée par rapport à un système de référence commun.

11. Procédé selon la revendication 10, **caractérisé en ce que** la détermination de la position relative des dispositifs (20, 30) s'effectue à intervalles réguliers.

12. Procédé selon la revendication 10, **caractérisé en ce que** la détermination de la position relative des dispositifs (20, 30) s'effectue de façon continue.

13. Procédé selon la revendication 11 ou 12, **caractérisé en ce qu'**on vérifie si la position relative définie se situe à l'intérieur de la plage de tolérance correspondante, la plage de tolérance étant une fenêtre de tolérance à deux dimensions.
